# EUROPÄISCHE PATENTSCHRIFT

(11) **EP 4 187 772 B1**
(45) Veröffentlichungstag und Bekanntmachung des Hinweises auf die Patenterteilung: **16.04.2025**
(21) Anmeldenummer: 21210955.7
(22) Anmeldetag: 29.11.2021
(51) Int. Cl.: H02P 6/08, H02P 6/28

(54) **WERKZEUGMASCHINE MIT EINEM BÜRSTENLOSEN MOTOR UND VERFAHREN ZUM STEUERN EINER WERKZEUGMASCHINE**
MACHINE TOOL WITH BRUSHLESS MOTOR AND METHOD FOR CONTROLLING A MACHINE TOOL
MACHINE-OUTIL DOTÉE D'UN MOTEUR SANS BALAI ET PROCÉDÉ DE COMMANDE D'UNE MACHINE-OUTIL

(43) Veröffentlichungstag der Anmeldung: 31.05.2023
(73) Patentinhaber: Hilti Aktiengesellschaft, 9494 Schaan (LI)
(72) Erfinder: Engler, Torsten, 82211 Herrsching (DE); Alter, Wolfgang, 86899 Landsberg am Lech (DE)
(74) Vertreter: Hilti Aktiengesellschaft Corporate Intellectual Property

(56) Entgegenhaltungen:
- WO-A1-2020/085507
- DE-A1- 10 261 509
- DE-A1- 102018 124 589
- DE-U1- 202014 003 133
- US-A1- 2010 251 509

## Beschreibung

Die Erfindung betrifft eine Werkzeugmaschine, umfassend einen bürstenlosen Motor und eine Leistungselektronik, wobei die Leistungselektronik wenigstens eine H-Brückenschaltung aufweist, über die der Motor mit Energie versorgt wird.

Verfahren zur Ansteuerung des Motors sehen teilweise vor, dass ein Betriebsparameter des Motors periodisch gemessen wird. Dazu kann die Leistungselektronik wenigstens einen Messwiderstand aufweisen. Der Messwiderstand kann in einer Zuleitung der H-Brückenschaltung angeordnet sein.

Die DE 10 2018 124589 A1 beschreibt eine Bestromungsvorrichtung zum Abbauen eines Erregerspulenmagnetfelds.

Die WO 2020/085507 A1 beschreibt ein Elektrowerkzeug mit einem bürstenlosen Motor. Ein Steuermittel des Elektrowerkzeugs kann einen Vorlaufwinkelsteuerabschnitt zum Steuern eines Vorlaufwinkels des bürstenlosen Motors enthalten.

Aufgabe der vorliegenden Erfindung ist es, eine Werkzeugmaschine sowie ein Verfahren zum Steuern einer Werkzeugmaschine jeweils nach Anspruch 1 und Anspruch 5 anzubieten, die es ermöglichen, einen für die Steuerung des Motors erforderlichen Betriebsparameter präzise und kostengünstig zu messen.

Gelöst wird die Aufgabe durch eine Werkzeugmaschine, umfassend einen bürstenlosen Motor und eine Leistungselektronik, wobei die Leistungselektronik wenigstens eine H-Brückenschaltung aufweist, über die der Motor mit Energie versorgt wird, wobei wenigstens ein Messwiderstand in einer Zuleitung der H-Brückenschaltung angeordnet ist, wobei die Leistungselektronik eingerichtet ist, die H-Brückenschaltung kreuzweise zu schalten.

Die H-Brückenschaltung kann wenigstens vier Schalter aufweisen. Die Schalter können Leistungshalbleiter, beispielsweise FET-Transistoren, beispielsweise MOS-FETs, sein und / oder umfassen. In jedem der vier Äste der H-Brückenschaltung kann einer der Schalter vorgesehen sein.

Der Motor kann im Brückenzweig der H-Brückenschaltung angeordnet sein. Die H-Brückenschaltung kann eine erste und eine zweite Zuleitung aufweisen. Jeweils zwei der vier Äste können mit einer der beiden Zuleitungen verbunden sein.

Dann kann unter einer kreuzweisen Schaltung der H-Brückenschaltung in einer Variante eine Schaltung der vier Schalter verstanden werden, bei der ein erster Schalter eines ersten Astes, der mit der ersten Zuleitung verbunden ist, sowie ein vierter Schalter in einem vierten Ast, der mit der zweiten Zuleitung verbunden ist, zunächst geschlossen sein. Ein zweiter und ein dritter Schalter, die jeweils in den einem der beiden verbleibenden Ästen, insbesondere einem zweiten und einem dritten Ast, sitzen, können geöffnet sein.

Ebenso kann eine zweite Variante einer kreuzweisen Schaltung entsprechen, wenn der zweite Schalter im zweiten Ast, der mit der zweiten Zuleitung verbunden ist, sowie der dritte Schalter, der in einem dritten Ast, der mit der ersten Zuleitung verbunden ist, geschalten sind und der erste und der vierte Schalter geöffnet sind.

Es können somit für eine kreuzweise Schaltung jeweils der erste und der vierte oder der zweite und der dritte Schalter geschaltet und die jeweils anderen Schalter geöffnet sein.

Die erste Variante und die zweite Variante können insbesondere periodisch und abwechselnd geschaltet werden.

Der Messwiderstand ist in einer Zuleitung der H-Brückenschaltung angeordnet. Beispielsweise kann der Messwiderstand in der zweiten Zuleitung angeordnet sein.

Durch die kreuzweise Schaltung der H-Brückenschaltung kann erreicht werden, dass der Messwiderstand bei periodischer Ansteuerung des Motors zumindest während eines überwiegenden Teils einer Schaltperiode der Schaltung der H-Brückenschaltung stromdurchflossen ist.

Somit kann während eines verhältnismäßig langen Messfensters innerhalb jeder Schaltperiode ein elektrischer Parameter des Messwiderstandes, beispielsweise ein Spannungsabfall über diesem, gemessen werden. Aus dem gemessenen Parameter kann dann auf einen Betriebsparameter des Motors geschlossen werden. Beispielsweise kann anhand des Spannungsabfalls in Verbindung mit dem Widerstandswert des Messwiderstandes auf den durch ihn fließenden und somit auch auf einen durch den Motor fließenden Strom geschlossen werden.

Da das Messfenster verhältnismäßig lang ist, kann alternativ oder ergänzend eine Messung mit einem Zeitversatz gegenüber dem Beginn einer Schaltperiode beginnen. Der Zeitversatz kann derart gewählt sein, dass Einschwingvorgänge oder dergleichen abgeklungen sind. Dadurch kann die Messgenauigkeit der Messung weiter verbessert werden.

Da lediglich ein in der Zuleitung angeordneter Messwiderstand benötigt wird, ergibt sich eine kostengünstige Herstellung.

Durch die Anordnung in der Zuleitung ist ferner der Messwiderstand mit zumindest einem seiner beiden Anschlüsse durchgängig an ein definiertes Potential angeschlossen.

Die kreuzweise Schaltung der H-Brückenschaltung benötigt keine Freilaufphase des Motors.

Die Verbesserung der Messgenauigkeit kann sich vor allem dann auswirken, wenn der Motor eine hohe Leistung erzeugen kann und / oder soll. Beispielsweise kann der Motor wenigstens 1 kW, beispielsweise wenigstens 3 kW, Maximalleistung haben. Die Maximalleistung kann eine Spitzenleistung sein und / oder eine Dauerleistung, beispielsweise über mindestens 60 Sekunden hinweg gemessen, sein.

Der Motor kann über mehrere Spulen verfügen. Die Spulen können über mehrere H-Brückenschaltungen ansteuerbar und / oder angesteuert sein. Dazu kann die Leistungselektronik mehrere, insbesondere wenigstens drei, H-Brückenschaltungen aufweisen.

Die Werkzeugmaschine kann als mobile Werkzeugmaschine ausgebildet sein. Dazu kann sie beispielsweise als elektrische Handwerkzeugmaschine ausgebildet sein und / oder eine solche umfassen.

Alternativ oder ergänzend kann die Werkzeugmaschine, insbesondere die mobile Werkzeugmaschine, auch als Bauroboter ausgebildet sein und / oder einen solchen umfassen.

Die Werkzeugmaschine kann zum Einsatz auf einer Baustelle, beispielsweise einer Hochbau-Baustelle und / oder einer Tiefbau-Baustelle eingerichtet sein. Sie kann zum Bohren, Trennen, beispielsweise Meißeln, Sägen oder Schneiden, Pressen und / oder Schleifen ausgebildet sein. Dementsprechend kann die Werkzeugmaschine eingerichtet sein, ein Werkzeug, beispielsweise ein Bohrwerkzeug, ein Trennwerkzeug, beispielsweise ein Meißelwerkzeug, ein Sägeblatt oder ein Messer, ein Presswerkzeug oder ein Schleifwerkzeug, beispielsweise eine Schleifscheibe, aufzunehmen.

Denkbar ist alternativ oder ergänzend, dass die Werkzeugmaschine zum Saugen, Blasen und / oder Messen eingerichtet ist. Dementsprechend kann sie zur Aufnahme eines Werkzeugs in Form eines Saug- und / oder eines Blaswerkzeugs, beispielsweise ein Saug- und / oder Blasrohr, und / oder eines Messwerkzeugs eingerichtet sein.

Die Werkzeugmaschine, insbesondere die mobile Werkzeugmaschine, kann tragbar sein. Sie kann dazu ein Gewicht von höchstens 43 kg, besonders bevorzugt von höchstens 25 kg, insbesondere von höchstens 10 kg, beispielsweise höchstens 5 kg, aufweisen. Die Werkzeugmaschine kann beispielsweise eine elektrische Handwerkzeugmaschine sein.

Dabei kann "mobil" auch umfassen, dass die Werkzeugmaschine eingerichtet ist, temporär, beispielsweise zur Ausführung einer Bauarbeit, an eine Oberfläche fixiert zu sein. Somit können beispielsweise auch ständergeführte Handwerkzeugmaschinen mitumfasst sein.

Alternativ oder ergänzend zur Tragbarkeit kann die Werkzeugmaschine, insbesondere die mobile Werkzeugmaschine, eine mobile Plattform aufweisen. Die mobile Plattform kann ein Fahrwerk, beispielsweise ein Kettenfahrwerk und / oder ein Räderfahrwerk, aufweisen.

Insbesondere kann die Werkzeugmaschine auch als Bauroboter ausgebildet sein. Dazu kann sie einen Manipulator aufweisen. Am Manipulator kann ein Endeffektor angeordnet und / oder ausgebildet sein. Der Endeffektor kann eingerichtet sein, mittelbar und / oder unmittelbar das Werkzeug aufzunehmen. Beispielsweise kann die Werkzeugmaschine als Bohrbauroboter, als Meißelbauroboter und / oder als Schleifbauroboter ausgebildet sein.

In den Rahmen der Erfindung fällt des Weiteren ein Verfahren zum Steuern einer Werkzeugmaschine mit den vorangehend beschriebenen Merkmalen.

Die H-Brückenschaltung der Werkzeugmaschine wird kreuzweise und periodisch geschaltet.

Der in der Zuleitung der H-Brückenschaltung angeordnete Messwiderstand kann somit über einen verhältnismäßig langen Zeitraum innerhalb einer Schaltperiode stromdurchflossen sein.

Somit kann der elektrischer Parameter über einen großen Anteil der Schaltperiode hinweg ermittelbar sein.

Auch kann eine Messung am Messwiderstand zeitversetzt zum Beginn einer Schaltperiode erfolgen. Somit kann beispielsweise eine Messung begonnen werden, nachdem Einschwingvorgänge oder dergleichen, zumindest weitgehend, abgeklungen sind.

Aufgrund der geringen Anzahl erforderlicher Messwiderstände kann sich ein Kostenvorteil ergeben.

Ein elektrischer Parameter kann am Messwiderstand während wenigstens einem Messfenster gemessen werden. Der elektrische Parameter kann beispielsweise ein Spannungsabfall am Messwiderstand sein. Der Spannungsabfall kann, insbesondere bei konstantem oder im Wesentlichen konstantem Widerstandswert des Messwiderstands, mit einem Betriebsparameters des Motors, beispielsweise einem Stromdurchfluss durch den Motor, korrelieren. Somit kann anhand des elektrischen Parameters, der am Messwiderstand gemessen wird, auf den Betriebsparameter des Motors geschlossen werden.

Das Messfenster kann eine Messdauer von wenigstens 50 % der Schaltperiode der Schaltung der H-Brückenschaltung umfassen.

Bei mehreren Messfenstern innerhalb einer Schaltperiode der Schaltung der H-Brückenschaltung kann ein längstes Messfenster für eine Messung des elektrischen Parameters ausgewählt werden. Alternativ oder ergänzend kann bei mehreren Messungen des elektrischen Parameters während unterschiedlicher Messfenster innerhalb der Schaltperiode diejenige Messung weiterverwendet werden, die aus dem längsten Messfenster stammt.

Beruht die Messung auf einer Summation oder einer Durchschnittsbildung mehrerer Einzelmesswerte innerhalb eines Messfensters, so können bei einem längeren Messfenster Zufallsschwankungen besser ausgeglichen werden. Auch hierdurch lässt sich die erreichbare Messgenauigkeit verbessern.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- **Fig. 1**: eine Werkzeugmaschine in Form einer elektrischen Handwerkzeugmaschine;
- **Fig. 2**: eine Werkzeugmaschine in Form eines Bauroboters;
- **Fig. 3 und 4**: Schaltbilder einer Leistungselektronik mit einer H-Brückenschaltung;
- **Fig. 5**: ein Zeitdiagramm der Zustände zweier Schalter sowie von Zeiträumen möglicher Messfenstern; und
- **Fig. 6**: ein Blockschaltbild einer Leistungselektronik mit mehreren H-Brückenschaltungen.

In der nachfolgenden Beschreibung der Figuren werden zur Erleichterung des Verständnisses der Erfindung für gleiche oder sich funktional entsprechende Elemente jeweils die gleichen Bezugszeichen verwendet.

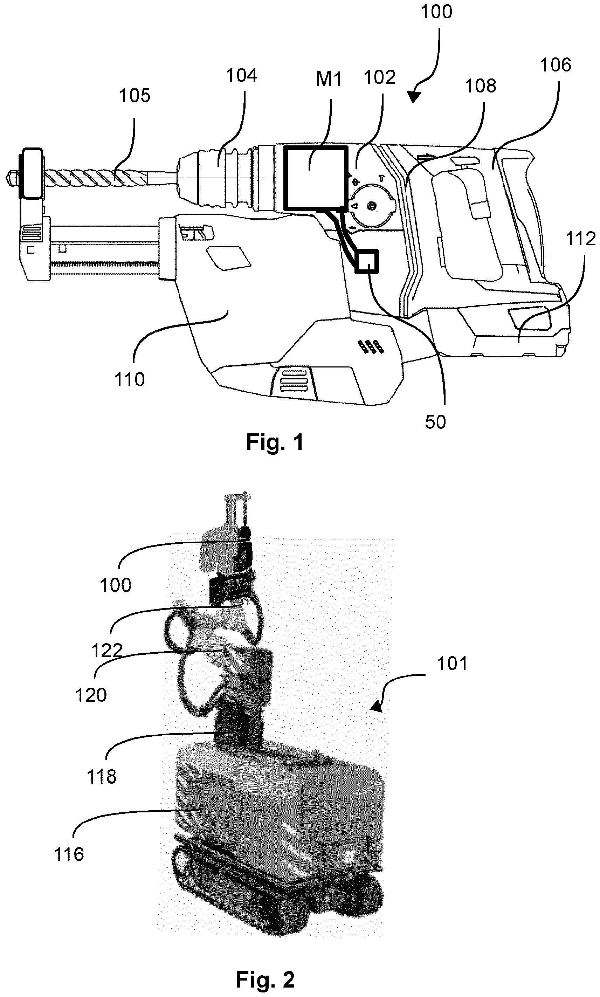

**Fig. 1** zeigt eine Werkzeugmaschine **100.** Die Werkzeugmaschine 100 umfasst eine Bohrwerkzeugmaschine **102.** Diese ist als elektropneumatische Bohrhammermaschine ausgebildet. Sie weist einen Werkzeughalter **104** auf, in dem ein Gesteinsbohrwerkzeug **105** aufgenommen ist. Die Werkzeugmaschine 100 ist zum Bohren von armiertem Gestein ausgebildet.

Weiter weist die Werkzeugmaschine 100 einen Griffbereich **106** auf. Der Griffbereich 106 ist zur manuellen und / oder mechanischen Halterung der Werkzeugmaschine 100 ausgebildet.

Zwischen dem Griffbereich 106 und der übrigen Werkzeugmaschine 100 ist eine Vibrationsdämpfung **108** ausgebildet, die eingerichtet ist, eine Übertragung von Vibrationen von der übrigen Werkzeugmaschine 100 auf den Griffbereich 106 zu minimieren.

Weiter weist die Bohrvorrichtung 100 eine Saugvorrichtung **110** auf. Die Saugvorrichtung 110 ist, insbesondere lösbar, an der Werkzeugmaschine 100 angeordnet. Sie ist eingerichtet, wahlweise einen Luftstrom durch Unterdruck oder durch Überdruck zu erzeugen. Somit ist sie wahlweise als Saugvorrichtung oder als Blasvorrichtung betreibbar.

Die Bohrwerkzeugmaschine 102 und die Saugvorrichtung 110 werden von einem Akkupack **112** mit elektrischer Energie versorgt.

Die Bohrwerkzeugmaschine 102, und damit die Werkzeugmaschine 100, weist ferner eine Leistungselektronik **50** auf.

Die Leistungselektronik 50 ist elektrisch mit einem Motor **M1** verbunden. Der Motor M1 ist ein bürstenloser Motor. Er ist zum Antrieb des Werkzeugs 105 eingerichtet. Die Leistungselektronik 50 ist eingerichtet, den Motor M1 anzusteuern.

Die Leistungselektronik 50 und der Motor M1 sind innerhalb der Bohrwerkzeugmaschine 102 angeordnet. Aus Darstellungsgründen sind sie in Fig. 1 lediglich schematisch abgebildet.

Denkbar ist, dass die Saugvorrichtung 110 ebenfalls einen bürstenlosen Motor aufweist, der von einer der Leistungselektronik 50 entsprechenden Leistungselektronik der Saugvorrichtung 110 angesteuert wird.

**Fig. 2** zeigt eine Werkzeugmaschine **101.** Die Werkzeugmaschine 101 ist als Bohrbauroboter ausgebildet. Sie weist eine mobile Plattform **116** auf. Die mobile Plattform 116 ist beispielsweise als Kettenfahrzeug ausgebildet. Die mobile Plattform 116 kann fernsteuerbar, teilautonom und / oder vollständig autonom steuerbar sein.

Auf der mobilen Plattform 116 ist eine Hubvorrichtung **118** angeordnet, durch die ein Manipulator **120** zusätzlich in vertikaler Richtung verlagerbar ist. Der Manipulator 120 ist in Form eines Armes ausgebildet. Er weist sechs Freiheitsgrade auf.

An seinem freien Ende weist der Manipulator 120 eine Werkzeugmaschinenhalterung 122 auf. In der Werkzeugmaschinenhalterung 122 ist eine Werkzeugmaschine 100 aufgenommen. Die Werkzeugmaschine 100 kann der vorangehend im Zusammenhang mit Fig. 1 beschriebenen Ausführungsform entsprechen.

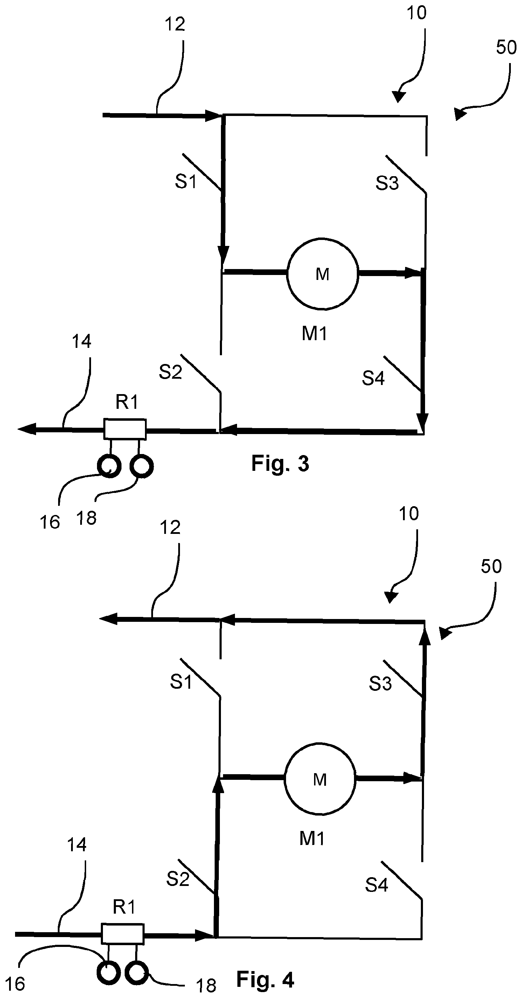

**Fig. 3** und **Fig. 4** zeigen vereinfachte Schaltbilder einer Leistungselektronik 50 mit einer H-Brückenschaltung **10.** Die Leistungselektronik 50 kann der Leistungselektronik 50 der Ausführungsbeispiele gemäß Fig. 1 und Fig. 2 entsprechen.

Die H-Brückenschaltung 10 weist insgesamt vier Schalter **S1, S2, S3, S4** auf.

Die Schalter S1, S2, S3, S4 können beispielsweise Leistungshalbleiter sein. Sie können beispielsweise Transistoren sein und / oder solche umfassen. Jeweils zwei der Schalter S1, S2 bzw. S3, S4 sind miteinander in Reihe und zu den jeweils übrigen beiden anderen Schaltern S3, S4 bzw. S1, S2 parallelgeschaltet.

Jeder der Schalter S1, S2, S3, S4 ist dabei in einen von vier Ästen der H-Brückenschaltung 10 geschaltet.

Die H-Brückenschaltung 10 wird über eine erste und eine zweite Zuleitung 12, 14 mit Energie versorgt. In einer der beiden Zuleitungen **12, 14,** beispielsweise in der zweiten Zuleitung 14, ist ein Messwiderstand **R1** geschaltet.

Sein Spannungsabfall kann mithilfe von 2 Messstellen **16, 18** gemessen werden. In dem Brückenzweig der H-Brückenschaltung 10 ist der Motor M1 geschaltet. Der Motor M1 ist wiederum ein bürstenlosen Motor.

Fig. 3 und 4 zeigen zwei Phasen innerhalb einer Schaltperiode, durch die der Motor M1 angesteuert wird. Die H-Brückenschaltung wird dazu kreuzweise geschaltet.

In einer ersten Phase, wie sie in Fig. 3 dargestellt ist, sind die Schalter S1 und S4 geschaltet, während die Schalter S2 und S3 geöffnet sind. Strom kann somit beispielsweise von der ersten Zuleitung 12 über den Schalter S1 und den Motor M1 sowie dem Schalter S4 zur zweiten Zuleitung 14 fließen. Der Messwiderstand R1 ist in dieser Phase stromdurchflossen. Ein Spannungsabfall ist, insbesondere proportional zum durch den Messwiderstand R1 fließenden Strom, an den Messstellen 16, 18 messbar.

In einer zweiten Phase innerhalb der Schaltperiode, wie sie in Fig. 4 dargestellt ist, sind dagegen die Schalter S1 und S4 geöffnet. Nun sind die Schalter S2 und S3 geschlossen.

Strom kann in dieser zweiten Phase von beispielsweise der zweiten Zuleitung 14 über den Messwiderstand R1, den Schalter S2 und den Motor M1 und anschließend über den Schalter S3 zur ersten Zuleitung 12 fließen. Wiederum ist auch in dieser Phase der Messwiderstand R1 stromdurchflossen. Auch in dieser Phase lässt sich somit an den Messstellen 16, 18 ein zum Stromfluss durch den Messwiderstand R1 proportionaler Spannungsabfall messen.

Eine solche kreuzweise Schaltung der Schalter S1, S2, S3, S4, insbesondere mit den zwei verschiedenen Phasen wie in Fig. 3 und Fig. 4 dargestellt, kann nun anschließend wiederholt werden.

Die Richtung des Stromflusses, insbesondere von der ersten Zuleitung 12 zur zweiten Zuleitung 14 oder umgekehrt, kann durch Einstellen der an Anschlüssen der Zuleitungen 12, 14 liegenden Potentiale einstellbar sein.

Die Steuerung der Schalter S1, S2, S3, S4 kann durch eine Steuereinheit der Leistungselektronik 50 erfolgen. Die Steuereinheit kann beispielsweise einen Mikrocontroller aufweisen. Der Mikrocontroller kann einen Mikroprozessor, eine Speichereinheit mit einem darin ausführbar abgelegten Programmcode sowie Steuerausgänge aufweisen. Der Programmcode kann eingerichtet sein, bei Ausführung auf dem Mikrocontroller die H-Brückenschaltung 10 kreuzweise zu schalten. Insbesondere kann er eingerichtet sein, bei Ausführung auf dem Mikrocontroller die H-Brückenschaltung 10 periodisch und abwechselnd entsprechend der zwei Phasen gemäß Fig. 3 und Fig. 4 zu schalten.

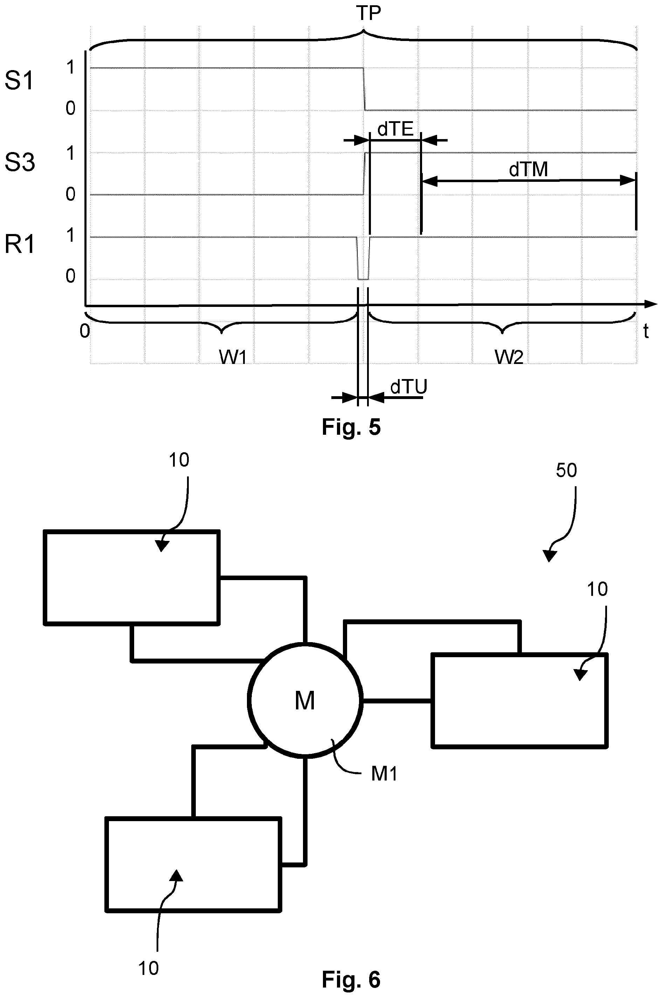

**Fig. 5** zeigt ein Zeitdiagramm der Leistungselektronik 50 und der H-Brückenschaltung 10 aus Fig. 3 und Fig. 4 über eine Schaltperiode **TP.** Beispielhaft sind Schaltzustände der beiden Schalter S1, S3 über die Zeit aufgetragen. Der Wert 1 entspricht dabei einem geschlossenen Schalter, während der Wert 0 einem geöffneten Schalter entspricht. Diese Zustände entsprechen gleichzeitig Stromflüssen durch den jeweiligen Schalter S1 bzw. S3.

Als dritter Graph ist ein Stromfluss durch den Messwiderstand R1, vereinfachend auf zwei Stufen reduziert, aufgetragen. Dabei deutet wiederum ein Wert von 1, dass Strom durch den Messwiderstand R1 fließt, wären ein Wert von 0 bedeutet, dass kein Strom oder zumindest ein nur vernachlässigbar geringer Strom durch den Messwiderstand R1 fließt.

Es ist zu erkennen, dass die Schalter S1 und S3 gegenläufig schalten. Somit ist immer genau einer der beiden Schalter S1 oder S3 eingeschaltet, während der jeweils andere Schalter S3 bzw. S1 geöffnet ist.

Strom fließt dabei nahezu zu jedem Zeitpunkt durch den Messwiderstand R1. Eine Ausnahme bildet ein kurzzeitiger Umschaltzeitraum **dTU,** während dem die Schalter S1 und S3, und insbesondere auch die Schalter S2 und S4, jeweils ihren Schaltzustand wechseln.

Somit kann eine Messung eines elektrischen Parameters, beispielsweise des Spannungsabfalls am Messwiderstand R1 innerhalb der Schaltperiode TP während zwei Messfenstern **W1, W2** erfolgen. Zu erkennen ist, dass die beiden Messfenster W1, W2 insgesamt deutlich mehr als 50 Prozent der Schaltperiode TP umfassen.

Das Tastverhältnis, insbesondere das Verhältnis der Zeitdauer der ersten Phase (Fig. 3) zu der Zeitdauer der zweiten Phase (Fig. 4) kann variiert werden. Somit kann auch eines der beiden Messfenster W1, W2 länger sein als das jeweils andere. Sind die beiden Messfenster W1, W2 gleich lang, so kann eine Messung eines elektrischen Parameters des Messwiderstands R1 in einem der beiden Messfenster W1, W2 oder in beiden Messfenstern W1, W2 erfolgen. In letzterem Fall kann beispielsweise ein Mittelwert aus Ergebnissen der Einzelmessungen in den einzelnen Messfenstern W1 bzw. W2 erfolgen.

Beispielhaft wird in dem Zeitablauf gemäß Fig. 5 davon ausgegangen, dass eine Messung während des zweiten Messfensters W2 erfolgt.

Um Fehlmessungen aufgrund von Einschwingvorgängen oder dergleichen zu vermeiden, kann nach Beginn des Messfensters W2, beispielsweise nach einer Flanke des am Messwiderstand R1 gemessenen Spannungsabfalls, eine Einschwing-Zeitdauer **dTE** abgewartet werden. Nach Ablauf der EinschwingZeitduer dTE kann dann die eigentliche Messung über eine Zeitdauer **dTM** hinweg erfolgen.

Einzelmesswerte während dieser Messdauer dTM können beispielsweise gemittelt werden, um einen auch anderweitig weiter verwendbaren Messwert des elektrischen Parameters des Messwiderstands R1 zu erhalten.

**Fig. 6** zeigt nun ein Blockschaltbild eines weiteren Ausführungsbeispiels einer Leistungselektronik 50.

Die Leistungselektronik 50 weist mehrere, insbesondere beispielsweise drei, **H-**Brückenschaltungen 10 auf. Die H-Brückenschaltungen 10 können, zumindest im Wesentlichen, der H-Brückenschaltung 10, wie sie vorangehend beschrieben worden ist, entsprechen.

In der Leistungselektronik 50 sind die einzelnen H-Brückenschaltungen 10 an jeweils unterschiedliche Spulenkreise des Motors M1 angeschlossen. Ihre jeweiligen Schaltperioden können zueinander zeitversetzt sein. Der Zeitversatz kann derart gewählt sein, dass sich ein möglichst runder, beispielsweise gleichmäßiger, Lauf des Motors M1 ergibt.

### Bezugszeichenliste

- 10: Brückenschaltung
- 12: Zuleitung
- 14: Zuleitung
- 16: Messstelle
- 18: Messstelle
- 50: Leistungselektronik
- 100: Werkzeugmaschine
- 101: Werkzeugmaschine
- 102: Bohrwerkzeugmaschine
- 104: Werkzeughalter
- 105: Gesteinsbohrwerkzeug
- 106: Griffbereich
- 108: Vibrationsdämpfung
- 110: Saugvorrichtung
- 112: Akkupack
- 116: Plattform
- 118: Hubvorrichtung
- 120: Manipulator
- M1: Motor
- R1: Messwiderstand
- S1: Schalter
- S2: Schalter
- S3: Schalter
- S4: Schalter
- TP: Schaltperiode
- W1: Messfenster
- W2: Messfenster
- dTE: Zeitdauer
- dTM: Zeitdauer
- dTU: Umschaltzeitraum

## Patentansprüche

1. **Werkzeugmaschine** (100, 101), umfassend
- einen bürstenlosen Motor (M1) und
- eine Leistungselektronik (50), wobei die Leistungselektronik (50) wenigstens eine H-Brückenschaltung (10) aufweist, über die der Motor (M1) mit Energie versorgt wird,
- wobei wenigstens ein Messwiderstand (R1) in einer Zuleitung (12, 14) der H-Brückenschaltung (10) angeordnet ist,
- wobei die Leistungselektronik (50) eingerichtet ist, die H-Brückenschaltung (10) kreuzweise zu schalten,
**dadurch gekennzeichnet, dass**
die Werkzeugmaschine (100, 101) eingerichtet ist, einen elektrischen Parameter am Messwiderstand (R1) während wenigstens einem Messfenster (W1, W2) zu messen, wobei bei mehreren Messfenstern (W1, W2) innerhalb einer Schaltperiode (TP) der Schaltung der H-Brückenschaltung (10) das längste Messfenster (W1, W2) für eine Messung des elektrischen Parameters ausgewählt wird und / oder wobei bei mehreren Messungen des elektrischen Parameters während unterschiedlicher Messfenster (W1, W2) innerhalb der Schaltperiode (TP) diejenige Messung weiter verwendet wird, die aus dem längsten Messfenster (W1, W2) stammt.

2. Werkzeugmaschine nach dem vorhergehenden Anspruch, **dadurch gekennzeichnet, dass** die Leistungselektronik (50) mehrere, insbesondere wenigstens drei, H-Brückenschaltungen (10) aufweist.

3. Werkzeugmaschine nach einem der vorhergehenden Ansprüche, **dadurch gekennzeichnet, dass** die Werkzeugmaschine (100, 101) als elektrische Handwerkzeugmaschine ausgebildet ist und / oder eine solche umfasst.

4. Werkzeugmaschine nach einem der vorhergehenden Ansprüche, **dadurch gekennzeichnet, dass** die Werkzeugmaschine (100, 101) als Bauroboter ausgebildet ist und / oder eine solche umfasst.

5. **Verfahren** zum Steuern einer Werkzeugmaschine (100, 101), umfassend einen bürstenlosen Motor (M1) und eine Leistungselektronik (50), wobei die Leistungselektronik (50) wenigstens eine H-Brückenschaltung (10) aufweist, über die der Motor (M1) mit Energie versorgt wird, wobei wenigstens ein Messwiderstand (R1) in einer Zuleitung (12, 14) der H-Brückenschaltung (10) angeordnet ist, wobei die Leistungselektronik (50) eingerichtet ist, die H-Brückenschaltung (10) kreuzweise zu schalten,
wobei die H-Brückenschaltung (10) kreuzweise und periodisch geschaltet wird,
wobei ein elektrischer Parameter am Messwiderstand (R1) während wenigstens einem Messfenster (W1, W2) gemessen wird,
**dadurch gekennzeichnet, dass**
bei mehreren Messfenstern (W1, W2) innerhalb einer Schaltperiode (TP) der Schaltung der H-Brückenschaltung (10) das längste Messfenster (W1, W2) für eine Messung des elektrischen Parameters ausgewählt wird und / oder dass bei mehreren Messungen des elektrischen Parameters während unterschiedlicher Messfenster (W1, W2) innerhalb der Schaltperiode (TP) diejenige Messung weiter verwendet wird, die aus dem längsten Messfenster (W1, W2) stammt.

6. Verfahren nach Anspruch 5, **dadurch gekennzeichnet, dass** das Messfenster (W1, W2) eine Zeitdauer von wenigstens 50% der Schaltperiode TP der Schaltung der H-Brückenschaltung (10) umfasst.

## Claims

1. Power tool (100, 101), comprising
- a brushless motor (M1) and
- a power electronics system (50), wherein the power electronics system (50) has at least one H-bridge circuit (10), via which the motor (M1) is supplied with power,
- wherein at least one measuring resistor (R1) is arranged in a feed line (12, 14) of the H-bridge circuit (10),
- wherein the power electronics system (50) is configured to switch the H-bridge circuit (10) crosswise,
**characterized in that**
the power tool (100, 101) is configured to measure an electrical parameter at the measuring resistor (R1) during at least one measuring window (W1, W2), wherein, when there are several measuring windows (W1, W2) within one switching period (TP) for the switching of the H-bridge circuit (10), the longest measuring window (W1, W2) is selected for measuring the electrical parameter and/or wherein, when the electrical parameter is measured several times during different measuring windows (W1, W2) within the switching period (TP), the measurement that originates from the longest measuring window (W1, W2) is used further.

2. Power tool according to the preceding claim, **characterized in that** the power electronics system (50) has a plurality of, in particular at least three, H-bridge circuits (10).

3. Power tool according to either of the preceding claims, **characterized in that** the power tool (100, 101) is in the form of an electric handheld power tool and/or comprises such an electric handheld power tool.

4. Power tool according to one of the preceding claims, **characterized in that** the power tool (100, 101) is in the form of a construction robot and/or comprises such a construction robot.

5. Method for controlling a power tool (100, 101), comprising a brushless motor (M1) and a power electronics system (50), wherein the power electronics system (50) has at least one H-bridge circuit (10), via which the motor (M1) is supplied with power, wherein at least one measuring resistor (R1) is arranged in a feed line (12, 14) of the H-bridge circuit (10), wherein the power electronics system (50) is configured to switch the H-bridge circuit (10) crosswise,
wherein the H-bridge circuit (10) is switched crosswise and periodically,
wherein an electrical parameter is measured at the measuring resistor (R1) during at least one measuring window (W1, W2),
**characterized in that**,
when there are several measuring windows (W1, W2) within one switching period (TP) for the switching of the H-bridge circuit (10), the longest measuring window (W1, W2) is selected for measuring the electrical parameter and/or **in that**, when the electrical parameter is measured several times during different measuring windows (W1, W2) within the switching period (TP), the measurement that originates from the longest measuring window (W1, W2) is used further.

6. Method according to Claim 5, **characterized in that** the measuring window (W1, W2) covers a time period of at least 50% of the switching period TP for the switching of the H-bridge circuit (10).

## Revendications

1. Outil-machine (100, 101) comprenant
- un moteur sans balais (M1) et
- une électronique de puissance (50), l'électronique de puissance (50) comportant au moins un circuit à pont en H (10) par l'intermédiaire duquel le moteur (M1) est alimenté en énergie,
- au moins une résistance de mesure (R1) étant agencée dans une ligne d'alimentation (12, 14) du circuit à pont en H (10),
- l'électronique de puissance (50) étant conçue de façon à commuter le circuit à pont en H (10) de manière croisée,
**caractérisé en ce que**
l'outil-machine (100, 101) est conçu de façon à mesurer un paramètre électrique au niveau de la résistance de mesure (R1) pendant au moins une fenêtre de mesure (W1, W2) ; dans le cas de plusieurs fenêtres de mesure (W1, W2), la fenêtre de mesure (W1, W2) la plus longue est sélectionnée pour une mesure du paramètre électrique à l'intérieur d'une période de commutation (TP) du circuit à pont en H (10), et/ou, lorsque plusieurs mesures du paramètre électrique sont effectuées pendant différentes fenêtres de mesure (W1, W2) à l'intérieur de la période de commutation (TP), la mesure provenant de la fenêtre de mesure (W1, W2) la plus longue étant utilisée.

2. Outil-machine selon la revendication précédente, **caractérisé en ce que** l'électronique de puissance (50) comporte plusieurs, en particulier au moins trois, circuits en pont en H (10).

3. Outil-machine selon l'une des revendications précédentes, **caractérisé en ce que** l'outil-machine (100, 101) est conçu sous la forme d'un outil-machine électrique portatif et/ou comprend un tel outil-machine.

4. Outil-machine selon l'une des revendications précédentes, **caractérisé en ce que** l'outil-machine (100, 101) est conçu sous la forme d'un robot de construction et/ou comprend un tel robot.

5. Procédé de commande d'un outil-machine (100, 101) comprenant un moteur sans balais (M1) et une électronique de puissance (50), l'électronique de puissance (50) comportant au moins un circuit à pont en H (10) par l'intermédiaire duquel le moteur (M1) est alimenté en énergie, au moins une résistance de mesure (R1) étant agencée dans une ligne d'alimentation (12, 14) du circuit à pont en H (10), l'électronique de puissance (50) étant conçue de façon à commuter le circuit à pont en H (10) de manière croisée, le circuit à pont en H (10) étant commuté de manière croisée et périodique,
un paramètre électrique étant mesuré au niveau de la résistance de mesure (R1) pendant au moins une fenêtre de mesure (W1, W2),
**caractérisé en ce que**
dans le cas de plusieurs fenêtres de mesure (W1, W2) à l'intérieur d'une période de commutation (TP) du circuit du circuit à pont en H (10), la fenêtre de mesure la plus longue (W1, W2) est sélectionnée pour une mesure du paramètre électrique et/ou, lorsque plusieurs mesures du paramètre électrique sont effectuées pendant différentes fenêtres de mesure (W1, W2) à l'intérieur de la période de commutation (TP), la mesure qui provient de la fenêtre de mesure la plus longue (W1, W2) est utilisée.

6. Procédé selon la revendication 5, **caractérisé en ce que** la fenêtre de mesure (W1, W2) comprend une durée d'au moins 50 % de la période de commutation TP du circuit à pont en H (10).
